# EUROPEAN PATENT APPLICATION

(11) **EP 4 372 666 A1**
(43) Date of publication of application: **22.05.2024**
(21) Application number: 22207939.4
(22) Date of filing: 17.11.2022
(51) Int. Cl.: G06Q 50/18, H04L 9/00

(54) **A SYSTEM AND METHOD FOR CREATING, TRADING, AND SPLITTING SMARTNFTS**

(71) Applicant: CryptoQorn AG, 6300 Zug (CH)
(72) Inventor: Bergqvist, Johan, 8172 Niederglatt ZH (CH); Herp, Arnold, 91096 Moehrendorf (DE)
(74) Representative: Prins Intellectual Property AG

(57) **Abstract**

A computer-implemented method to create a SmartNFT for building and bootstrapping a company owning a set of non-fungible tokens (NFT) associated with a digital or physical asset and a set of non-votable shares (NVS) from the company, the method comprising the steps: on a computing system: (a.) providing a unique digital identifier (NFT_ID) for each non-fungible token (NFT) in the set of NFTs; (b.) providing a unique serial number (NVS_ID) for each non-votable share (NVS) in a set of non-votable shares; (c.) defining a number n of NVS to be bundled with each NFT, in a ratio of n:1, wherein n >=1; (d.) for each NFT: (i.) bundling of n non-bundled NVS into a collection of NVS (NVS_collection); (ii.) creating a SmartNFT with a unique digital identifier (SmartNFT_ID) as a smart contract minted on a blockchain network, wherein the SmartNFT refers to the NVS_ID of the n NVS of the collection of NVS and to the NFT_ID of the NFT assigned to the collection of NVS; (iii.) marking the NVSs processed in steps i) and ii) as bundled to avoid redundance; (e.) for each SmartNFT created in step d): (i.) associating the SmartNFT to a blockchain wallet owned by the company; (ii.) registering the company as owner of each bundled NVS of a SmartNFT in a digital shareholder book owned by the company. The invention further refers to a computer-implemented method to trade and split the SmartNFT.

## Description

### Technical Field

The invention relates to a system and method for creating, trading, and splitting a blockchain based token of a bootstrapped company.

### Technical Background

Taking a closer look and analyzing the customs and the market of non-fungible tokens (NFTs) based on blockchain technology reveals many problems: 1. NFT are often subject to hacks and forks; 2. NFTs are often subject to scams and collapsed projects; 3. for founders of NFT related companies it is often difficult to communicate and proof good governance; 4. NFTs may lead to due diligence issues; 5. professional and fair NFT valuation methods for bootstrapped companies are hardly feasible or do not exist at all. One of the main reasons why NFTs or NFT-related companies are facing these problems is that so far NFTs are not regulated at all and are not subject to any special requirements.

Setting up a new company that secures digital art or another digital asset using NFTs and that offers them for sale and trade based on distributed ledger (DLT) technology is therefore cumbersome and may be seen as dubious.

Therefore, there is a need for a technical solution for NFT-related companies companies, to increase the security of their NFTs.

### Definitions:

A bootstrap company (or bootstrapping a company) refers to the process of starting a company with only personal savings, including borrowed or invested funds from family or friends, as well as income from initial sales. Self-funded businesses do not rely on traditional financing methods, such as the support of investors, crowdfunding, or bank loans.

Blockchain: The blockchain is a distributed ledger that allows participants to write and update records on the ledger and cryptography ensures that records stored remain the same once added. Records are added to the ledger in form of transactions, and these transactions are hashed and grouped in blocks. Each block is cryptographically linked to the next block. Markel tree or hash tree is a cryptographical method that ensures transactions stored in blockchain are linked with mathematical hashes. This guarantees that no modification can invalidate the entire record. The hashes provide an efficient method to verify any transaction on the blockchain. With this method, records can be verified without going through the entire data stored in the network. [R1]

Smart Contracts: Blockchain-enabled smart contracts are computer programs that are consistently executed by a network of mutually distrusting nodes, without the arbitration of a trusted authority. Smart contracts provide organizations the possibility to collaborate and execute self-enforcing contract clauses in a blockchain network without the involvement of a third-party. [R1]

Non-fungible token (NFT): A NFT is a unique digital identifier that cannot be copied, substituted, or subdivided, that is recorded in a blockchain, and that is used to certify authenticity and ownership. The ownership of an NFT is recorded in the blockchain and can be transferred by the owner, allowing NFTs to be sold and traded. The NFT can be associated with a particular digital or physical asset including but not limited to, art, and a license to use the asset for a specified purpose. NFTs function like cryptographic tokens, but unlike cryptocurrencies such as Bitcoin or Ethereum, NFTs are not mutually interchangeable, and so are not fungible. [R2]

Know Your Customer (KYC): KYC is a process to identify and continuously verify customers during the business relationship with a (financial or non-financial) institution with a primary goal to comply with a set of regulatory requirements. The process of KYC may use physical or digital channels, sometimes called eKYC. [R3]

Mint/minting: Minting is the process of creating or producing something. In relation to blockchains, minting means, validating information, creating a new block, and recording that information on a blockchain network. For example, someone can mint an NFT or mint a new cryptocurrency.

Burn/burning: The process of invalidating an object in the blockchain network to abolish all functionalities.

Non-votable share (NVS): NVS (sometimes called participation certificates) are shares of a company that provide the shareholder no vote on corporate matters, such as election of the board of directors or mergers. This type of share is usually implemented for individuals who want to invest in the company's profitability and success at the expense of voting rights in the direction of the company.

Blockchain wallet: A blockchain wallet or crypto wallet is software or hardware that enables users to store and use cryptocurrency or NFTs. The wallet holds users' private keys and information where the public keys are located on the blockchain. With the combination of both public and private keys, a crypto wallet can enable a secured operation to validate a balance and send or receive cryptocurrency transactions.

Custodial / non-custodial wallet: A custodial wallet means that a third party is holding your private keys for you. In contrast, a non-custodial wallet gives you complete control over your private keys. That means you're totally in control of your funds. The third party is removed from the equation, but it also means you have sole responsibility for keeping track of your keys.

GDPR (General Data Protection Regulation): The General Data Protection Regulation (EU) (GDPR) is a regulation in EU law on data protection and privacy in the European Union (EU) and the European Economic Area (EEA). The GDPR is an important component of EU privacy law and of human rights law. The GDPR's primary aim is to enhance individuals' control and rights over their personal data and to simplify the regulatory environment for international business. GDPR-compliant refers to a process, which complies with GDPR. [R4]

### References:

[R1] Udokwu et al., The State of the Art for Blockchain-Enabled Smart-Contract Applications in the Organization, Conference Paper, November 2018, DOI: 10.1109/ISPRAS.2018.00029.
[R2] https://en.wikipedia.org/wiki/Non-fungible_token, visited November 2022
[R3] Moreno et al., A Survey of KYC/AML for Cryptocurrencies Transactions, 2021, DOI:10.4018/978-1-7998-5728-0.ch002
[R4] REGULATION (EU) 2016/679 OF THE EUROPEAN PARLIAMENT AND OF THE COUNCIL of 27 April 2016.

### Summary of the Invention

It is an objective of the invention to provide a technical tool for building and bootstrapping a company owning a set of non-fungible tokens associated with a digital or physical asset and to solve at least some of the problems related to unregulated NFTs.

At least one of the objectives of the present invention is achieved by a computer-implemented method according to claim 1 to create a unique SmartNFT, by a computer-implemented method according to claim 7 to trade the SmartNFT, and by a computer-implemented method according to claim 10 to split the SmartNFT.

The computer-implemented method to create a unique SmartNFT for building and bootstrapping a company owning a set of non-fungible tokens (NFT) associated with a digital or physical asset and a set of non-votable shares (NVS) from the company, comprises the steps: on a computing system: (a.) providing a unique digital identifier (NFT_ID) for each non-fungible token (NFT) in the set of NFTs; (b.) providing a unique serial number (NVS_ID) for each non-votable share (NVS) in a set of non-votable shares; (c.) defining a number n of NVS to be bundled with each NFT, in a ratio of n:1, wherein n >=1; (d.) for each NFT: (i.) bundling of n non-bundled NVS into a collection of NVS (NVS_collection); (ii.) creating a SmartNFT with a unique digital identifier (SmartNFT_ID) as a smart contract minted on a blockchain network, wherein the SmartNFT refers to the NVS_ID of the n NVS of the collection of NVS and to the NFT_ID of the NFT assigned to the collection of NVS; (iii.) marking the NVSs processed in steps i) and ii) as bundled to avoid redundance; (e.) for each SmartNFT created in step (d.): (i.) associating the SmartNFT to a blockchain wallet owned by the company; (ii.) registering the company as owner of each bundled NVS of a SmartNFT in a digital shareholder book owned by the company. In other words, the method may create tokenized, asset-secured shares of a company.

In order to raise or increase capital for financing innovative projects, it is possible for any joint stock company to conventionally offer a legally defined share of the total capital in non-voting shares (NVS). Switzerland was the first country to recognize that in order to promote new innovative DLT-based companies, the legislation needed to be adapted. In 2021, the first legislation became effective to allow the digital issuance and trading of shares stored in a blockchain. The institutions of Switzerland and European Union are now working closely together, and it is foreseeable that similar legislation will soon be introduced in the EU countries as well. The legal requirements for issuing and trading digital shares are accordingly strictly regulated, and the companies are subject to financial supervision.

The present invention takes advantage of the regulation of digital shares and by linking digital shares to non-fungible tokens, both based on DLT technology, it can overcome the previous problems associated with the unregulated NFT market. At the same time, it allows buyers of the SmartNFT to participate on the growth of the bootstrapped company capital.

The legal form of the company is such that a sufficient amount of non-voting shares (NVS) of the company can be issued to customers and repurchased, in accordance with the laws of the country in which the company is incorporated. The company further owns physical or digital assets, e.g. artworks, secured by a digital NFT certificate and one or more NVSs in a 1:n ratio, wherein n >= 1. Each NFT has a unique digital identifier (NFT_ID). Each NVS has a unique serial number (NVS_ID) and n NVSs (n ≥ 1) are bundled to a NVS_collection. The NFTs are assigned to a NVS_collection to create a SmartNFT, in order to allow customers to participate in the performance of the company via the NVS. A SmartNFT is thus a new token type based on contractual binding of an NFT (e.g. linked to an artwork) with a collection of NVS of the company and implemented on a blockchain infrastructure with means of implementing smart contracts, e.g. Ethereum. The blockchain network or blockchain infrastructure must therefore support smart contracts.

Each NVS can be associated to only one NVS_collection. Each NFT can be associated to only one NVS_collection to create a SmartNFT. Thus, with a ratio NFT:NVS of 1:n the total number of NFTs and NVS_collections are equal to the total number of created SmartNFTs.

The SmartNFTs thus allows the company to participate buyers of the SmartNFT also on the value growth of company capital. Therefore, a SmartNFT may also be traded and be even dissolved by a split-transaction to a separate NFT and separate NVSs upon reaching the conditions set by the initial issuing bootstrap company, i.e. e.g. upon payment of the current value of the collection of NVS to the last owner of the SmartNFT.

When trading all payment transactions are processed via the blockchain network selected by the bootstrap company. As consequence all participants will have a blockchain wallet from the bootstrap company to be filled with a cryptocurrency transfer from another blockchain wallet or by changing FIAT money to cryptocurrency.

In some embodiments of the method a digital storage system preferably owned by the company may be provided on the computing system for storing private data related to the NFT, the NVS and/or the SmartNFT. The NFT related information may comprise at least one of total number NFTs, list of all NFT_IDs, status of NVSs about assignment to SmartNFTs, details of legal person owning the NFT, blockchain wallet address of legal person owning the NFT, the digital asset and information thereto. The NVS related information may comprise at least one of total number NVSs, list of all NVS_IDs, status of NVSs about assignment to SmartNFTs, details of legal person owning the NVS, blockchain wallet address of legal person owning the NVS. The SmartNFT related information may comprise at least one of total number SmartNFTs, list of all SmartNFT_IDs, details of legal person owning the SmartNFT, blockchain wallet address of legal person owning the SmartNFT. The legal person may be a natural person or a company. Details of the legal person may comprise for a natural person: first name, last name, title, street, street no., ZIP code, Residence, Country, ID no., blockchain wallet address, email address; for a company: company name, corporate ID no., street, street no., ZIP code, residence, country, blockchain wallet address, email address, list of natural persons representing the company. All detailed information about the registered legal person may be subject to a digitally implemented KYC process (Know Your Customer) to verify integrity of the information and for providing a qualified digital signature of a registered natural person.

In some embodiments of the method the digital storage system may be a secured GDPR-compliant digital storage system.

In some embodiments of the method the digital shareholder book may be implemented on the blockchain network. The implementation of the shareholder book on the blockchain network may be required under certain jurisdictions to be legally compliant.

In some embodiments of the method only the SmartNFT_ID and the associated NFT_ID and NVS_ID are stored and publicly accessible in the blockchain infrastructure. All other information may be stored in the digital storage system and may be accessible by the company and the owner of the SmartNFT, NFT and NVS only.

Typically, at least parts of the method to create the SmartNFT are implemented as a smart contract on the blockchain network.

The invention further relates to a computer-implemented method implemented as a smart contract on the blockchain network to trade the SmartNFT created according to the method described above, wherein the SmartNFT is associated to a blockchain wallet of the owner, typically the company is the first owner after creation of SmartNFT, and traded on a digital marketplace provided by the company. The method to trade comprises the steps: (a.) creating an offer by an owner to a buyer of the SmartNFT; (b.) if the offer is accepted by the buyer of the SmartNFT on the digital marketplace, then a transfer document for the transfer of the SmartNFT is generated referencing to at least one transfer condition; (c.) obtaining qualified digital signatures for the digital transfer document from the owner and the buyer and storing the digitally signed transfer document secure and tamper-proof in the digital storage system; (d.) if the signed transfer document is stored in the digital storage system and all the at least one transfer condition are met then the following steps are executed by the smart contract for the transfer of the SmartNFT: (i.) transferring the ownership of the SmartNFT from the blockchain wallet of the owner to the blockchain wallet of the buyer, e.g. by (ii.) registering in the digital shareholder book the buyer as owner of all the NVS of the collection of NVSs associated to the transferred SmartNFT; (e.) if one of the at least one transfer condition is not met then the transfer document and the smart contract for transfer of the SmartNFT are annulled.

The first acquisition of the NVS shares in combination with a NFT (SmartNFT) from the bootstrap company by a first buyer is documented in a first transfer document (or also called a purchase document) and logged in the (blockchain based) shareholder book of the company. Later trading e.g. between first buyer (such as investors) and further buyers is also logged in the digital shareholder book and additionally documented in a further transfer document (also called a cession document, fulfilling legal requirements for the transfer of shares). The transfer document references the terms and conditions to be accepted and is qualified digitally signed by the seller and the buyer. These purchase contracts are stored secure and tamper-proof in a (GDPR compliant) digital storage system. The transfer documents are contracts between owner and buyer of the SmartNFT.

The initial value of the NFT may be determined by an evaluation process, among comparing prices of competitors for similar assets structure. The initial value of one NVS is determined in a certificate of incorporation of the company.

When creating SmartNFTs, the NFT and NVS always remain in the possession of the bootstrap company (either in its own custody in case there is a corresponding license for it or outsourced to a bank as custodian) until split process was executed. Only the rights of ownership and use - stipulated in terms and conditions, which must be explicitly agreed by an acting person - are transferred to the last buyer from the previous owner by qualified digital signature of both in a purchase document. The ownership of the SmartNFT referencing the NFT and NVS is then transferred to the new owner.

Other terms and conditions may apply to the NFT, NVS or the SmartNFT which may be written in digital Term Sheet and stored in the digital storage system. Such a Term Sheet may include e.g. terms of copyrights related e.g. to a digital art work associated to the NFT.

In some embodiments of the method to trade the buyer may be approved and registered via a digitally implemented KYC process, and the approved detailed information of the buyer is stored in the digital storage system. Thus, all the necessary data of the prospective buyer may be verified through a KYC process and stored in the digital storage system to be legally compliant with the respective jurisdiction.

In some embodiments the at least one condition defined in the transfer document for the transfer of the SmartNFT may be selected from price of SmartNFT, price of NVS associated to SmartNFT, price of NFT associated to SmartNFT, amount for payment, term for payment, type of digital signature, term for obtaining digital signature, address of blockchain wallet of the buyer, address of blockchain wallet of the owner, term for fulfilment of selected conditions, signing of Term Sheet for NFT, NVS and/or SmartNFT.

Initial investment packages with e.g., 50, 500 and 5.000 SmartNFTs may be offered to a set of investors selected and verified with an KYC process (Know Your Customer) and listed in a whitelist by the issuing bootstrap company. Alternatively, or as a supplement, a certain percentage of all SmartNFTs may be offered individually to a general audience (also verified by KYC process) for investment in line with the applicable regulatory laws.

A KYC process (Know Your Customer) may be implemented digitally to fulfil the legal requirements of the country where the bootstrap company is registered for digital trading of shares.

For the accounting of the digitally managed NVS within the SmartNFTs, a digital shareholder book is kept of the ownership of each NVS, which may be implemented with blockchain technology to be legally compliant. The purchase contracts for the commercial transactions (trading) are securely stored in digital storage system, preferably a GDPR-compliant digital storage system.

The invention further relates to a computer-implemented method implemented as a smart contract on the blockchain network to split the SmartNFT created or traded according to the method described above, wherein the SmartNFT is associated to a blockchain wallet of the owner. The method to split comprises the steps: (a.) separating the NFT associated with the SmartNFT out and transferring the ownership of the separated NFT from the company to the owner of SmartNFT; (b.) registering in the digital shareholder book the company as owner of each NVS of an NVS_collection associated to the SmartNFT; (c.) burning the SmartNFT.

In some embodiments the execution of the method to split the SmartNFT may be linked to at least one condition defined in the smart contract to split the SmartNFT, wherein the at least one condition is selected from price of NVS associated to SmartNFT, price of NFT associated to SmartNFT, amount for payment, term for payment, term for fulfilment of selected conditions, earliest time after creation of SmartNFT until split can be executed, and wherein the method to split the SmartNFT is executed only when the selected at least one condition is met.

The split transaction may be subject to other conditions referred to e.g. in the Term Sheet of the NFT, NVS and/or SmartContract. Such conditions may be set by the bootstrap company, e.g.: (a) all SmartNFTs are sold out, i.e. transferred at least once to a buyer; (b) a defined minimal valuation of the asset associated to the NFT is reached; (c) a certain time span is over. Such conditions may be attributed to the smart contract to split the SmartNFT.

After the split process is executed the ownership of all NVSs are legally transferred back to the bootstrap company. The ownership of the NFT referenced in the SmartNFT is transferred to the wallet of the owner of the SmartNFT. The SmartNFT is finally burned (deactivated).

The invention further relates to a computing system for performing the above-described methods to create, trade and split a SmartNFT. The system comprised a digital shareholder book associated to the company, a blockchain wallet associated to the company, at least one blockchain wallet associated to a buyer, and a digital storage system, preferably a GDPR-compliant digital storage system. The digital shareholder book may be implemented on the blockchain network.

### Brief Explanation of the Figures

The invention is described in greater detail below with reference to embodiments that are illustrated in the figures. The figures show:
- Fig. 1: chart with objects and relation related to the creation of a SmartNFT;
- Fig. 2: chart with objects and relation related to the trading of the SmartNFT;
- Fig. 3: chart with objects and relation related to the splitting of the SmartNFT.

### Embodiments of the Invention

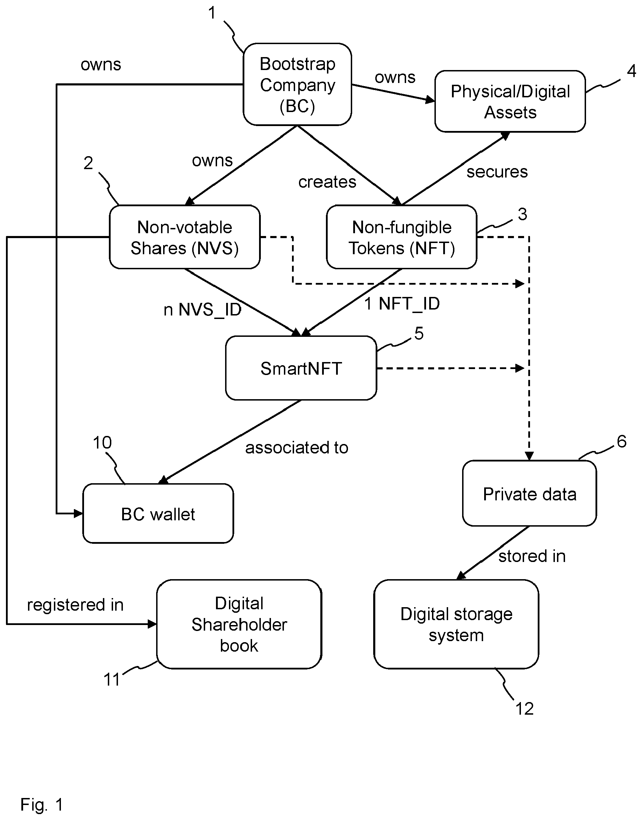

Fig. 1 shows a chart with objects and relations related to the method of or system for creating a SmartNFT 5 by a bootstrap company 1 to build and bootstrap the company 1. To do so, the company 1 owns a set of non-votable shares 2 (NVS). Each NVS 2 of the set of NVSs has a unique serial number (NVS_ID). The NVS 2 and the NVS_ID are stored in a digital shareholder book 11 owned by the company 1, which is preferably implemented on a blockchain network. The company 1 further holds digital or physical assets 4. The digital or physical assets 4 are secured by a set of non-fungible tokens 3 (NFT), which are created by the company 1. Each NFT 3 of the set of NFTs has a unique digital identifier (NFT_ID).

The SmartNFT created by the company 1 is a smart contract minted on a blockchain network and has a unique digital identifier (SmartNFT_ID). The SmartNFT 5 links a NFT to one or more NVS and thus refers to one NFT_ID and one or more NVS_IDs (NVS_collection). The SmartNFT is associated to or stored in a blockchain wallet 10 of the company 1.

### Example for creating an NVS_collection:

An NVS_collection with consecutive number #NVS_col may be built from linearly numbered NVSs (starting from 1 to the total number of NVSs) as follows: Assuming #assets is the total number of all NFTs and C_size is the chosen number of NVSs to be bundled in a collection, then in the collection with number #NVS_Col the NVSs with numbers (#NVS_Col - 1) * C_size + j, where j is from 1 to C_size, are bundled. To enable this, a certain legally permissible percentage of the capital stock non-voting share capital must be reserved for NVSs. If #assets is the number of NFTs the minimum number of NVSs must be greater or equal to #assets * C_size.

The system further comprises a digital storage system 12, preferably a GDPR-compliant digital storage system. Data 6 related to the NFT, NVS and SmartNFT, in particular private data, are stored in the digital storage system 12. Only the SmartNFT_ID, the NFT_ID and the NVS_ID are stored in the publicly accessible blockchain in the blockchain infrastructure.

The initial creating of a SmartNFT is typically done by the bootstrap company before a marketplace is set online for trading the SmartNFT to initial investors.

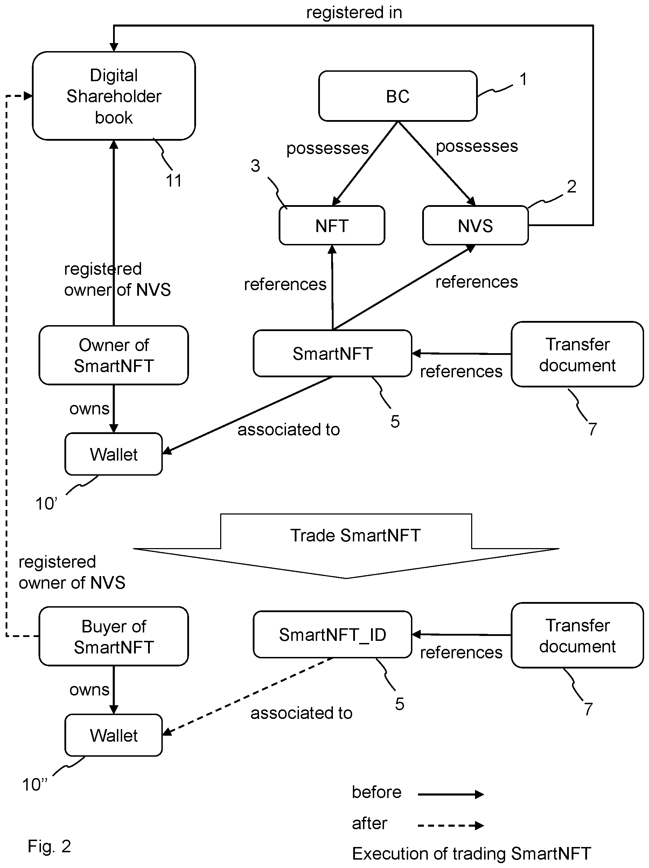

Fig. 2 shows a chart with objects and relations related to the method of or system for trading a SmartNFT 5. Before the first trading is executed, the SmartNFT previously created by the company 1 is associated to a wallet owned by the company (wallet of the owner 10'). The NVS 2 associated to the SmartNFT 5 are registered in the digital shareholder book 11. The owner of the SmartNFT 5 is registered in the digital shareholder book 11 as owner of the NVS 2 associated to the SmartNFT 5.

For trading the SmartNFT 5, the company 1 provides a digital marketplace where the owner may create an offer for the SmartNFT 5 to a potential buyer of the SmartNFT 5. If the offer is accepted by a buyer of the SmartNFT 5 a digital transfer document 7 is created and stored in the digital storage system of the company 1. The transfer document 7 contains all the relevant information for the trade and the condition, which must be met to execute the transfer of ownership to the SmartNFT 5. The first acquisition of the SmartNFT 5 (i.e. the NVS in combination with the NFT) from the company is documented in a first digital transfer document (also called a purchase document). Every later acquisition of the SmartNFT is documented in a further digital transfer document called cession document, which fulfils legal requirements of the country of jurisdiction where the trading takes place.

If all conditions are met the ownership of the SmartNFT 5 is transferred from the blockchain wallet 10' of the owner (i.e. the company in case of the first trade) the blockchain wallet 10" of the buyer, who becomes the new owner. At the same time the buyer is registered in the digital shareholder book 11 as (new) owner of all the NVS 2 of the collection of NVSs associated to the transferred SmartNFT 5.

When trading the SmartNFT 5, the NFT 3 and the NVSs 2 referenced in the SmartNFT 5 typically remain in the possession of the bootstrap company until split process is initiated (see below). Only the rights of ownership and use are transferred to the last purchaser of the SmartNFT from previous owner by qualified digital signature of both in a transfer document 7 and associating the SmartNFT with the buyer's wallet 10".

If one of the transfer conditions is not met, then the transfer document 7 and the smart contract for the transfer of the SmartNFT 5 are annulled.

When a SmartNFT is traded (owner accepts an offer from another investor) additional conditions must be controlled and actions must be processed in the transaction. We can assume that all necessary data of the prospective buyer is available and verified through the KYC process.

In some embodiments of the method to trade the buyer may approved and registered via a digitally implemented KYC process, and the approved detailed information of the buyer is stored in the digital storage system. Thus, all the necessary data of the prospective buyer may be verified through a KYC process and stored in the digital storage system to be legally compliant with the respective jurisdiction.

Thus, when a SmartNFT is traded the following steps occur: 1. an interested owner creates an offer to potential buyers of a SmartNFT; 2. a buyer accepts the offer and this initiates the creation of a contract note in the form of a digital transfer document between owner (seller) and buyer, digitally signed by the owner; 3. the buyer digitally signs the contract note; 4. the buyer sends crypto money to the wallet of the owner (seller) within predefined time span; 5. when the crypto money is in the wallet of the owner (seller) within the predefined time span, the ownership of the SmartNFT is registered in the wallet of the buyer. The buyer can now see the new digital asset in his SmartNFT asset list of his wallet. If crypto money does not arrive in time, offer, and purchase of SmartNFT cease to be valid, meaning the owner (seller) is no longer bound to the offer.

The purchase of a SmartNFT referencing to at least one NVS is logged always in the digital shareholder book of the bootstrap company. The data defined above of the last buyer and seller are thus known to the bootstrap company to comply with legal requirements on the one hand, but also to be able to execute the split process as described below.

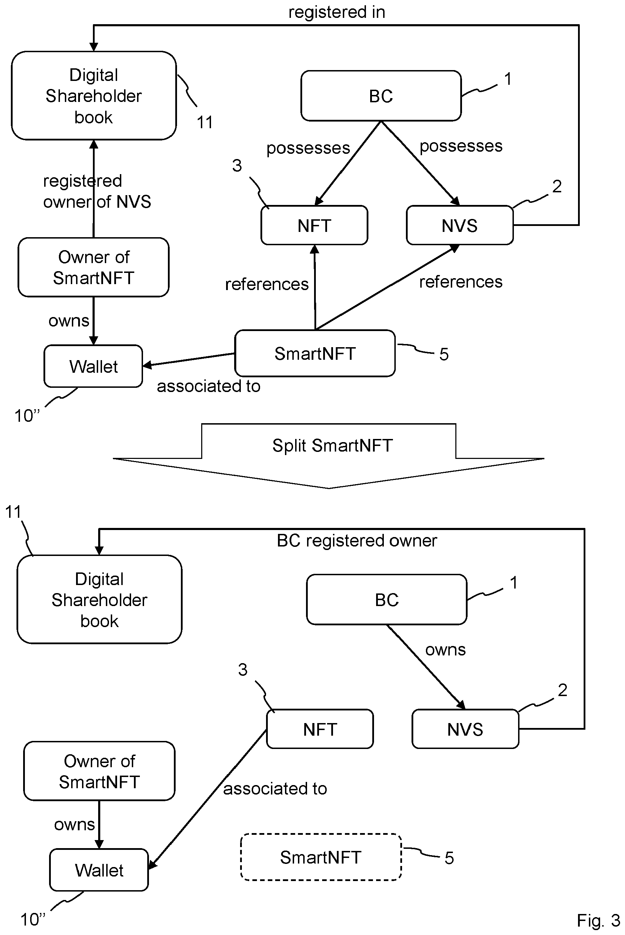

Fig. 3 shows a chart with objects and relations related to the method of or system for trading a SmartNFT 5. Before splitting, the SmartNFT 5 is owned by a previous buyer, which is not the company 1, and the ownership of the SmartNFT 5 is associated to the blockchain wallet 10" of the owner. The owner of the SmartNFT 5 is thus registered in the digital shareholder book 11 as legal owner of the NVSs 2 associated to the SmartNFT 5. The splitting process may be initiated by the company when certain conditions (set by the company and references in a term sheet of the SmartNFT, NFT and/or NVS) are met. When the splitting process is initiated, the NFT associated with the SmartNFT is separated out and the ownership of the separated NFT is transferred from the company to the owner of SmartNFT. The ownership is recorded in the wallet 10" of the owner. At the same time, the company is registered as owner of each bundled NVS of the split SmartNFT in the digital shareholder book. After the transfer of ownership of the NVS and NFT, the SmartNFT is burned, i.e. it has no functionality anymore.

Typically, the splitting process is bound to conditions defined in a smart contract to split the SmartNFT. These conditions may be e.g. a price for the NVS, a amount to be paid by the company to the owner for the NVS.

### Reference Signs

- 1: bootstrap company (BC)
- 2: non-votable share (NVS)
- 3: non-fungible token (NFT)
- 4: physical/digital asset
- 5: SmartNFT
- 6: private data
- 7: transfer document
- 10,10',10": blockchain wallet
- 11: digital shareholder book
- 12: digital storage system

## Claims

1. A computer-implemented method to create a SmartNFT for building and bootstrapping a company owning a set of non-fungible tokens (NFT) associated with a digital or physical asset and a set of non-votable shares (NVS) from the company, the method comprising the steps:
on a computing system:
a. providing a unique digital identifier (NFT_ID) for each non-fungible token (NFT) in the set of NFTs;
b. providing a unique serial number (NVS_ID) for each non-votable share (NVS) in a set of non-votable shares;
c. defining a number n of NVS to be bundled with each NFT, in a ratio of n:1, wherein n >=1;
d. for each NFT:
i. bundling of n non-bundled NVS into a collection of NVS (NVS_collection);
ii. creating a SmartNFT with a unique digital identifier (SmartNFT_ID) as a smart contract minted on a blockchain network, wherein the SmartNFT refers to the NVS_ID of the n NVS of the collection of NVS and to the NFT_ID of the NFT assigned to the collection of NVS;
iii. marking the NVSs processed in steps i) and ii) as bundled to avoid redundance;
e. for each SmartNFT created in step d):
i. associating the SmartNFT to a blockchain wallet owned by the company;
ii. registering the company as owner of each bundled NVS of a SmartNFT in a digital shareholder book owned by the company.

2. Method according to claim 1, wherein a digital storage system is provided on the computing system for storing private data related to the NFT, NVS and/or SmartNFT.

3. Method according to claim 1 or 2, wherein the digital storage system is a secured GDPR-compliant digital storage system.

4. Method according to one of claims 1 to 3, wherein the digital shareholder book is implemented on the blockchain network.

5. Method according to one of claims 1 to 4, wherein only the SmartNFT_ID and the associated NFT_ID and NVS_ID are stored and accessible in the blockchain infrastructure.

6. Method according to one of claims 1 to 5, wherein at least parts of the method are implemented as a smart contract on the blockchain network.

7. A computer-implemented method implemented as a smart contract on the blockchain network to trade the SmartNFT created according to the method of one of claim 1 to 6, wherein the SmartNFT is associated to a blockchain wallet of the owner and traded on a digital marketplace provided by the company, comprising the steps:
a. creating an offer by an owner to a buyer of the SmartNFT;
b. if the offer is accepted by the buyer of the SmartNFT on the digital marketplace, then a digital transfer document for the transfer of the SmartNFT is generated referencing to at least one transfer condition;
c. obtaining qualified digital signatures for the digital transfer document from the owner and the buyer and storing the digitally signed transfer document secure and tamper-proof in the digital storage system;
d. if the signed transfer document is stored in the digital storage system and all the at least one transfer condition are met then the following steps are executed by the smart contract for the transfer of the SmartNFT:
i. transferring the ownership of the SmartNFT from the blockchain wallet of the owner to the blockchain wallet of the buyer;
ii. registering in the digital shareholder book the buyer as owner of all the NVS of the collection of NVSs associated to the transferred SmartNFT;
e. if one of the at least one transfer condition is not met then the transfer document and the smart contract for transfer of the SmartNFT are annulled.

8. Method according to claim 7, wherein the buyer is approved and registered via a digitally implemented KYC process, and the approved detailed information of the buyer is stored in the digital storage system.

9. Method according to claim 7 or 8, wherein the at least one condition defined in the transfer document for the transfer of the SmartNFT is selected from price of SmartNFT, price of NVS associated to SmartNFT, price of NFT associated to SmartNFT, amount for payment, term for payment, type of digital signature, term for obtaining digital signature, address of blockchain wallet of the buyer, address of blockchain wallet of the owner, term for fulfilment of selected conditions.

10. A computer-implemented method implemented as a smart contract on the blockchain network to split the SmartNFT created or traded according to the method of one of claim 1 to 9, wherein the SmartNFT is associated to a blockchain wallet of the owner, comprising the steps:
a. separating the NFT associated with the SmartNFT out and transferring the ownership of the separated NFT from the company to the owner of SmartNFT;
b. registering in the digital shareholder book the company as owner of each NVS of an NVS_collection associated to the SmartNFT;
c. burning the SmartNFT.

11. Method according to claim 10, wherein the execution of the method to split the SmartNFT is linked to at least one condition defined in the smart contract to split the SmartNFT, wherein the at least one condition is selected from price of NVS associated to SmartNFT, price of NFT associated to SmartNFT, amount for payment, term for payment, term for fulfilment of selected conditions, earliest time after creation of SmartNFT until split can be executed, and wherein the method to split the SmartNFT is executed only when the selected at least one condition is met.

12. Computing system for performing the method according to one of the preceding claims, comprising a digital shareholder book associated to the company, a blockchain wallet associated to the company, at least one blockchain wallet associated to a buyer, and a digital storage system, preferably a GDPR-compliant digital storage system.

13. System according to one of claims 10, wherein the digital shareholder book is implemented on the blockchain network.
